# EUROPÄISCHE PATENTSCHRIFT

(11) **EP 0 509 116 B1**
(45) Veröffentlichungstag und Bekanntmachung des Hinweises auf die Patenterteilung: **27.09.1995**
(21) Anmeldenummer: 91106155.4
(22) Anmeldetag: 17.04.1991
(51) Int. Cl.: B66C 13/56, H01H 9/02, H04B 1/034

(54) **Hängetaster zum Steuern von Hebezeugen und/oder Krananlagen**
Pendant switch for controlling lifting devices and for crane-devices
Commutateur suspendu pour commander des engins de levage et/ou installations de grue

(43) Veröffentlichungstag der Anmeldung: 21.10.1992
(73) Patentinhaber: ABUS Kransysteme GmbH & Co. KG., 51647 Gummersbach (DE)
(72) Erfinder: Bühne, Werner, Dipl.-Ing., W-5270 Gummersbach (DE); Bube, Eckhard, Dipl.-Ing., W-5270 Gummersbach (DE)
(74) Vertreter: Dörner, Lothar, Dipl.-Ing.

(56) Entgegenhaltungen:
- EP-A- 0 376 066
- WO-A-90/08392
- DE-A- 1 566 449
- DE-A- 3 926 935
- DE-C- 612 398
- US-A- 4 739 128
- US-A- 4 972 051

## Beschreibung

### Technisches Gebiet:

Die Erfindung bezieht sich auf einen Hängetaster zum Steuern von Hebezeugen und/oder Krananlagen, der ein Gehäuse aufweist, das mit Tasten und Schaltern zur Steuerung versehen ist und von dem eine Fernsprecheinrichtung aufgenommen ist.

### Stand der Technik:

Mit Hilfe jeweils eines Hängetasters im herkömmlichen Sinn wird vom Boden aus jeweils ein Hebezeug gesteuert - vgl. DE-A1-39 26 935 -. Andere Funktionen als das Steuern des zugeordneten Hebezeugs sind mit einem solchen Hängetaster nicht ausführbar.

Nun kommt es regelmäßig vor, daß in derselben Werkhalle, in der das Hebezeug in Betrieb ist/auf derselben Kranbahn mehrere Hebezeuge verfahrbar sind. Insbesondere wenn diese Hebezeuge im sog. Tandembetrieb gefahren werden, ist es zweckmäßig, ja notwendig, daß die Kranführer untereinander in Verbindung stehen.

Bisher geschah dies mit Hilfe von tragbaren Fernsprecheinrichtungen. Der Kranführer muß also zwei unterschiedliche Geräte - Fernsprecheinrichtung und Hängetaster - möglicherweise zum gleichen Zeitpunkt bedienen. Das erhöht die Gefahr einer Fehlbedienung.

Es ist weiterhin eine Einrichtung zur Befehlsübertragung an einen Kranführer bekannt - vgl. DE-C-612 398 -. Der Kranführer befindet sich in einer an dem Kran befestigten Kranführerkabine. In seiner Nähe ist an dem Kran ein Lautsprecher angebracht, der durch eine Leitung mit einem Mikrofon verbunden ist. Das Mikrofon ist von einer Stelle unter dem Kran bedienbar, so daß dem Kranführer Fernbefehle mitgeteilt werden können. Am Mikrofon ist ein Not-Ausschalter angebracht, der durch eine Leitung mit einem Hauptschalter für den Kranantrieb verbunden ist.

### Darstellung der Erfindung:

Der Erfindung liegt die Aufgabe zugrunde, einen Hängetaster/ein Kranbedienungsgerät zu schaffen, der/das die Gefahr einer Fehlbedienung bei - insbesondere zum gleichen Zeitpunkt notwendiger - Bedienung des Hängetasters und der Fernsprecheinrichtung minimiert.

Gemäß der Erfindung wird die genannte Aufgabe dadurch gelöst, daß die Fernsprecheinrichtung einen Lautsprecher, ein Mikrophon und eine Tastatur aufweist, über die eine wechselseitige Sprechverbindung zwischen verschiedenen Bedienungspersonen möglich ist.

Bei der Erfindung nimmt das Gehäuse des Hängetasters nicht nur die Elemente für die Steuerung des Hebezeugs auf, sondern zusätzlich die eines Telephons. Der Hängetaster nach der Erfindung ist also ein Doppelgerät: Er kombiniert einen Hängetaster mit einem Telephon. Das Hantieren mit zwei voneinander getrennten Geräten entfällt. Vielmehr hat der Kranführer nur noch ein Gerät zu bedienen, das die Funktionen zweier Geräte in sich vereinigt. Das Gerät ist übersichtlich. Die schnelle und sichere Steuerung des Hebezeugs bleibt erhalten. Sie ist bei der Erfindung gepaart mit einer ebenso schnellen und sicheren Handhabung der Fernsprecheinrichtung.

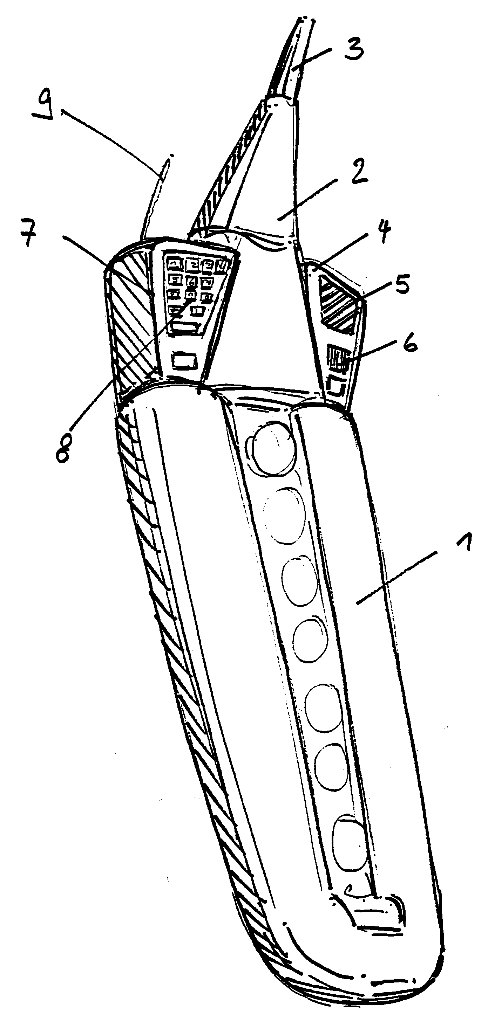

### Kurze Beschreibung der Zeichnung:

Ein Ausführungsbeispiel der Erfindung ist in der Zeichnung dargestellt und wird nachfolgend im einzelnen näher beschrieben. Die einzige Figur zeigt in perspektivischer Darstellung einen Hängetaster mit Fernsprecheinrichtung.

### Bester Weg zur Ausführung der Erfindung:

Der als Ausführungsbeispiel gewählte Hängetaster weist ein Gehäuse 1 auf. In dem Gehäuse sind im einzelnen nicht beschriebene und bezeichnete Taster und Schalter zur Steuerung eines Hebezeugs vorgesehen. An einer Stirnseite des im wesentlichen symmetrisch zu seiner Längsmittelachse ausgebildeten Gehäuses 1 tritt, geschützt durch eine Gummi- oder Kunststofftülle 2, eine Steuerleitung 3 aus. Die Steuerleitung 3 ist mit dem nicht dargestellten Hebezeug verbunden.

Das Gehäuse 1 nimmt neben den Tasten und Schaltern für die Steuerung des Hebezeugs eine Fernsprecheinrichtung 4, 7 auf. Die Fernsprecheinrichtung 4, 7 ist an der Stirnseite des Gehäuses 1 angeordnet, an der die Steuerleitung 3 aus dem Gehäuse 1 austritt.

Im Ausführungsbeispiel ist die Fernsprecheinrichtung 4, 7 geteilt. Sie ist mit einem Teil 4 an einer Seite, mit dem anderen Teil 7 an der anderen Seite der mittig aus dem Gehäuse 1 austretenden Steuerleitung 3 angeordnet.

Der eine Teil 4 der Fernsprecheinrichtung enthält einen Lautsprecher 5 und ein Mikrophon 6. Der andere Teil 7 der Fernsprecheinrichtung enthält eine Tastatur 8. An dem Gehäuse 1 ist außerdem eine Antenne 9 befestigt. Die Antenne 9 tritt parallel zu der Steuerleitung 3 aus dem Gehäuse 1 aus.

### Gewerbliche Verwertbarkeit:

Der Hängetaster nach der Erfindung ist bei Hebezeugen und/oder Krananlagen verwendbar, bei denen nicht nur die Hebezeuge gesteuert, sondern zwischen den Kranführern verschiedener Hebezeuge eine Fernsprechverbindung erforderlich ist.

## Patentansprüche

1. Hängetaster zum Steuern von Hebezeugen und/oder Krananlagen, der ein Gehäuse (1) aufweist, das mit Tasten und Schaltern zur Steuerung des Hebezeugs versehen ist und von dem eine Fernsprecheinrichtung (4, 7) aufgenommen ist, dadurch gekennzeichnet, daß die Fernsprecheinrichtung (4, 7) einen Lautsprecher (5), ein Mikrophon (6) und eine Tastatur aufweist, über die eine wechselseitige Sprechverbindung zwischen verschiedenen Bedienungspersonen möglich ist.

2. Hängetaster nach Anspruch 1, dadurch gekennzeichnet, daß die Fernsprecheinrichtung (4, 7) an der Stirnseite des Gehäuses (1) angeordnet ist, an der die Steuerleitung (3) aus dem Gehäuse (1) austritt.

3. Hängetaster nach Anspruch 1 oder 2, dadurch gekennzeichnet, daß die Fernsprecheinrichtung (4, 7) geteilt und mit einem Teil an einer Seite, mit dem anderen Teil an der anderen Seite der mittig aus dem Gehäuse (1) an dessen einer Stirnseite austretenden Steuerleitung (3) angeordnet ist.

4. Hängetaster nach Anspruch 3, dadurch gekennzeichnet, daß die Tastatur (8) der Fernsprecheinrichtung (4, 7) an der einen, der Lautsprecher (5) und das Mikrophon (6) der Fernsprecheinrichtung (4, 7) an der anderen Seite der Steuerleitung (1) angeordnet sind.

5. Hängetaster nach einem der Ansprüche 1 bis 4, dadurch gekennzeichnet, daß an dem Gehäuse (1) eine Antenne (9) der Fernsprecheinrichtung (4, 7) befestigt ist, die parallel zu der Steuerleitung (3) aus dem Gehäuse (1) austritt.

## Claims

1. Suspended control unit for the control of lifting gear and/or crane installations with a housing (1) that is fitted with buttons and switches for controlling the lifting gear and that accommodates a telephone device (4,7), the unit being characterised by the fact that the telephone device (4,7) includes a loudspeaker (5), a microphone (6) and a keypad facilitating two-way communication between different operators.

2. Suspended control unit as in Claim 1 in which the telephone device (4,7) is arranged on the face of the housing (1), from which the control cable (3) emerges from the housing (1).

3. Suspended control unit as in Claim 1 or 2 in which the telephone device (4,7) is divided, with one section arranged on one side and other section on the other side of a control cable (3) that emerges from one side of the housing (1).

4. Suspended control unit as in Claim 3 in which the keypad (8) of the telephone device (4,7) is arranged on the one side, and the loudspeaker (5) and the microphone (6) of the telephone device (4,7) on the other side of the control cable (1).

5. Suspended control unit as in Claims 1 to 4 in which an aerial (9) for the telephone device (4,7) is attached to the housing (1), said aerial emerging from the housing (1) parallel with the control cable (3).

## Revendications

1. Commutateur suspendu pour la commande d'engins de levage et/ou installations de grues, qui présente un boîtier (1) muni de touches et d'interrupteurs pour la commande de l'engin de levage, et dans lequel est logé un équipement téléphonique (4, 7), caractérisé en ce que l'équipement téléphonique (4, 7) présente un haut-par leur (5), un microphone (6) et un clavier, qui permettent une communication téléphonique alternative entre différents opérateurs.

2. Commutateur suspendu suivant la revendication 1, caractérisé en ce que l'équipement téléphonique (4, 7) est disposé sur le côté frontal du boîtier (1), sur lequel la ligne pilote (3) sort du boîtier (1).

3. Commutateur suspendu suivant les revendications 1 ou 2, caractérisé en ce que l'équipement téléphonique (4, 7) est partagé, et est disposé par une partie sur un côté, et par l'autre partie sur l'autre côté de la ligne pilote (3), sortant au centre du boîtier (1), sur l'un des côtés frontaux de ce dernier.

4. Commutateur suspendu suivant la revendication 3, caractérisé en ce que le clavier (8) de l'équipement téléphonique (4, 7) est disposé sur l'un des côtés, le haut-parleur (5) et le microphone (6) de l'équipement téléphonique (4, 7) étant disposés sur l'autre côté de la ligne pilote (1).

5. Commutateur suspendu suivant l'une quelconque des revendications 1 à 4, caractérisé en ce qu'une antenne (9) de l'équipement téléphonique (4, 7) est fixée sur le boîtier (1), cette antenne sortant du boîtier (1) à la parallèle de la ligne pilote (3).
